# EUROPEAN PATENT SPECIFICATION

(11) **EP 2 229 229 B1**
(45) Date of publication and mention of the grant of the patent: **14.11.2012**
(21) Application number: 09700879.1
(22) Date of filing: 12.01.2009
(51) Int. Cl.: B01D 1/26, B01D 3/06, B01D 3/14, C02F 1/06, C02F 1/04

(54) **METHOD AND PLANT FOR THE DESALINATION OF SALT WATER USING MSF DESALINATION UNITS WITH A STEAM RECIRCULATION SYSTEM**
VERFAHREN UND ANLAGE ZUR ENTSALZUNG VON SALZWASSER MITHILFE VON MSF-ENTSALZUNGSEINHEITEN MIT EINEM DAMPFREZIRKULATIONSSYSTEM
PROCÉDÉ ET USINE DE DESSALEMENT DE L'EAU DE MER UTILISANT DES UNITÉS DE DESSALEMENT PAR DÉTENTES SUCCESSIVES POURVUES D'UN SYSTÈME DE RECYCLAGE DE LA VAPEUR

(30) Priority: 11.01.2008 DE 102008004107
(43) Date of publication of application: 22.09.2010
(73) Proprietor: Babcock Borsig Service GmbH, 46049 Oberhausen (DE)
(72) Inventor: MASSARANI, Aldo, I-20124 Milan (IT)
(74) Representative: Cohausz & Florack
(86) International application number: PCT/EP2009/050257
(87) International publication number: WO 2009/087235

(56) References cited:
- WO-A-02/32813
- GB-A- 1 446 018
- GB-A- 2 403 432
- US-A- 2 979 443

## Description

The present invention relates to a method for the desalination of salt water using a heat input section with a brine heater powered by heating steam, a heat recovery section of multi-stage flash (MSF) distillation units, a heat rejection section and a deaerator and a plant for the desalination of salt water with at least a brine heater and a desalination zone of multi-stage flash (MSF) distillation stages.

The Plant can also include one deaerator. The preheated seawater is pumped as a recirculation brine into the heat recovery section, where the brine is gradually heated inside the tube bundle by means of the condensation of the steam produced inside the evaporator shell. The condensed steam is collected as a distillate stream and pumped to downstream plants / consumers.

Particularly, the present invention relates to MSF desalination plants. These plants are based on a thermal process working between two different temperatures: the top brine temperature of the process (which normally can not be increased above 110 to 115 °C for scaling problems) and the environmental temperature which, generally, is the sea water temperature.

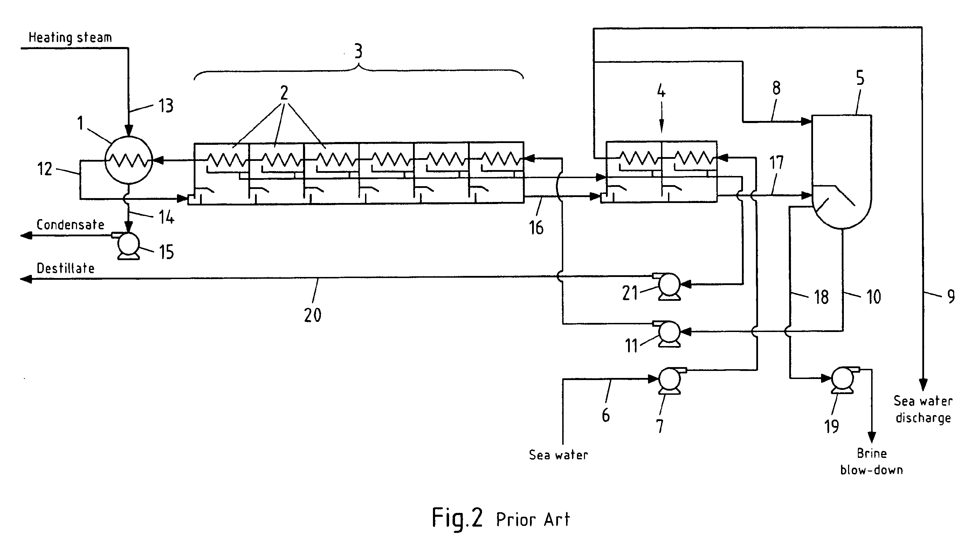

From a schematic point of view, an MSF desalination process may be briefly described with reference to Fig. 2, where three different sections can be distinguished:
➢ The heat input section or *"brine heater"* in which the heat is supplied to the process trough the heating steam coming from a boiler or other thermal plant.
➢ The heat recovery section in which the heat is exchanged totally internally to the process from the flashing brine stream to the recirculation brine inside the tube bundle.
➢ The heat rejection section in which the heat is exchanged between the process streams and the fresh sea water cooling stream. Due to the low temperatures of this part of the plant the major quantities of thermal energy is wasted to the sea water and just a minor quantity is recovered to the process with the make-up flow.

Both, the heat recovery and the heat rejection section, include several evaporating stages. In each stage the flashing brine is splashed in the evaporating chamber in which it releases a part of its thermal energy in order to produce pure steam. The steam produced will reach the condensation zone of the stage and, during the condensation, it releases its thermal energy to the recirculating brine (heat recovery section) or to the sea water cooling stream (heat rejection section).

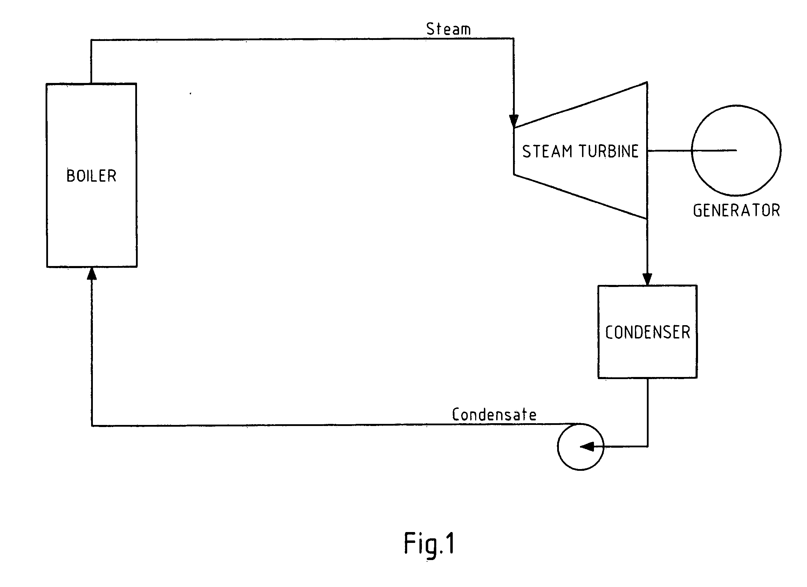

In FR-PS 15 79 110, different types of vapour compression plants (VC): ME (ME = Multi Effect) or MSF (Multi-Stage Flash) type are described, having downstream, in both cases, a make-up preheating realized trough an MSF plant. In Fig. 1 of this document, a vapour compression plant (ME type) is shown working on the higher process temperatures. The make-up stream is pre-heated trough an MSF plant utilizing the heat content in the salt water and in distillate water living the above mentioned portion of plant. Similarly, Fig. 2 shows a vapour compression plant (MSF type) working on the higher process temperatures. The make-up preheating is obtained trough an MSF plant. The other embodiments show how a back pressure steam turbine can be utilized to produce additional water (the exhaust steam is feeding the brine heater of an additional MSF plant) and in the same time to drive the compressor of the already described plants.

DE-OS 15 17 493 refers to a "Vapor Compressor Cycle" applied to a MSF Plant (this combination is also known as combined desalination cycle or hybrid system cycle). The Compressor is a mechanical compressor or reciprocal compressor actuated by a steam turbine. The turbine and the compressor steam are discharged to the brine heater.

From US-PS 3,396,086 a steam washing facility is known, which permits to minimize and to solve the problems due the scaling formation inside the mechanical compressor of a vapor compression desalination unit, which includes also a multi flash brine pre-heating facility.

US-PS 2,759,882 shows a combined desalination cycle VC (Vapor Compression) and MSF (Multi-stage flash) permits to improve the performances of a VC process (*"flash"* or *"submerge tube type")* by means of a combined cycle which includes a MSF plant. The MSF plant has the purpose to preheat the brine for the VC process and to recover the heat from the brine blow-down and from distillate streams. There, for a VC pure process a distillate cooler and a blow-down cooler are necessary. The known air ejector shown in Fig. 1 is still existing in all modern MSF units and has the purpose to remove the no-condensable gases from the plant.

In GB-PS 1 143 392, a combined power and desalination (MSF) cycle is shown. In this MSF process, the high temperature stages have a higher production than the low temperature stages. The first half part of process is producing 30% more than the second part. For this reason it is suggested to utilize the steam produced from the second part of MSF for energy production. Alternatively this energy may be utilized for a turbo-compressor which permits to increase the steam to the brine heater.

WO-A1-02/32813 describes a process and a plant for multi-stage flash desalination of water showing three different methods of reducing the specific heat consumption of the desalination plant. The first method consists of a partial recirculation of a distillate stream combined with a sub-cooling of the condensate leading the brine heater. The condensate from the brine heater flows to an additional heat exchanger before being returned to the other processes. Here, liquid product water is recirculated instead of steam. The second method is similar to the first method with the difference that recycle stream is the flashing brine which is taken from the flashing zone of a stage via a hot well and then pumped to the heat exchanger like in method one. The third method is again similar to method two, but here the partial brine is taken from the pressurised brine cycle in the pre-heater zone of the evaporator instead of from the flashing zone and liquid brine is recirculated.

The present invention is referred to minor modifications to do to the existing desalination units in order to increase the plant Performance Ratio and the Gained Output Ratio (G.O.R.).

The main object of the present invention is to increase the performances of existing desalination units in term of:
- Water production or plant capacity,
- Desalination plant G.O.R. (gained output ratio) or process efficiency and
- Distillate water quality.

Regarding the method, this object is solved by a method having the features specified in the preamble of claim 1 by that the steam produced in at least one stage of the rejection section and/or the heat recovery section is taken away and is pumped into a section up-stream with regard to the flashing brine flow. The invention has recognised that it is possible to use the existing latent heat in MSF desalination plants which otherwise would be lost.

Generally, the quantity of steam to be saved is roughly equal to the quantity of steam taken from the heat rejection stages. From calculations and technical formula it has been found that these savings have a positive effect for the desalination performance, particularly on the plant G.O.R. (Gained Output Ratio in kg of distillate / kg of leaving steam) - also called plant efficiency.

According to a preferred embodiment of the plant according to the invention the steam produced in at least one stage of the rejection section is pumped into the heating steam supplying the brine heater.

Regarding to another advantageous teaching according to this invention the steam produced in at least one stage of the distillation section is pumped into another distillation stage up-stream with regard to the flashing brine flow.

Another preferred embodiment is characterized in that the steam produced in at least one stage of the distillation section is pumped into the heating steam supplying the brine heater.

Regarding the plant for the desalination of salt water the object is solved by providing at least one steam recirculation line from at least one stage of the rejection section and/or the heat recovery section for the steam produced to a section or stage up-stream with regard to the flashing brine flow.

According to a further teaching of the invention, there is an additional pump for the additional steam recirculation line. Such an additional pump is helpful to control the steam flow and its amount with regard to the desalination process.

Another preferred embodiment of the present invention is characterized in that the additional steam recirculation line leads into a steam jet ejector.

The benefits which can be obtained by such a steam recirculation from the heat rejection section to the heat input section allow many modifications of steam recirculation lines within the scope of the present invention:
- From any heat rejection stage to any other heat rejection stage having a higher condensation temperature.
- From any heat rejection stage to any heat recovery stage
- From any heat recovery stage to any other heat recovery stage having a higher condensation temperature.
- From any heat recovery stage to the heat input section (brine heater)
- From any combination of the aforesaid routes.

The present invention covers, but is not limited to, all existing MSF desalination units, cross-flow or long tube design, single, double or multi deck type. The scope of this invention covers also the new desalination plants for which it is possible to find a lot of different additional benefits.

Further preferred and advantageous embodiments of the invention and especially of the method according to the invention are specified in the dependent claims and the drawings. Moreover, the present invention includes any variations and combinations of the described or illustrated embodiments.

The present invention will be described in greater detail in the following on the basis of a drawing, which merely illustrates preferred exemplary embodiments, on the basis of which the function of the method according to the present invention and a respective plant will also be described in detail. In the drawing
- Fig. 1: shows schematically a steam turbine process for energy production,
- Fig. 2: shows a schematic view of a MSF desalination plant according to the state of the art,
- Fig. 3: shows a schematic view of a first preferred embodiment of the steam recirculation system according to the present invention,
- Fig. 4: shows a schematic view of the steam recirculation system according to another preferred embodiment of the present invention, and
- Figs. 5 to 8: show other possible combinations of the steam recirculation system according to the invention.

It is very well known, from the thermodynamic point of view, that the energy which can be recovered from any source depends from the temperature difference from the above mentioned source and the minimum available temperature of the environmental system. 'Small' energy can be recovered easily and economically but a 'very large quantity' of available energy which cannot be recovered so easily.

Regarding the present invention, the above statement should be explained in a more practical way with the following example.

The steam has a very high content of energy which is also called *"latent heat"* or "condensation heat" (from a technical point of view it is better to refer to the enthalpy). Anyway, this energy can be recovered and easily transformed in mechanical energy through a steam turbine only if its pressure (and consequently its condensation temperature) is reasonable high. During the expansion into the turbine the steam pressure progressively will reduce and, at the end of process, the remaining energy should be discharge into the environment (waste heat) through the condenser, as is illustrated in Fig. 1, because it is no more convenient to recover the energy at so low temperatures (or pressure).

In Fig. 2, the schematic diagram of a MSF desalination plant according to the state of the art is shown. It comprises a brine heater 1, a heat recovery section 3, including several evaporating stages 2, a heat reject section 4 and, as an optional a deaerator 5. In each stage a portion of recirculating brine is evaporated and the steam is condensed winning the destillate. Sea water is pumped through a line 6 by a pump 7 into the heat reject section 4, and further fed as 'make-up' via line 8 into the deaerator 5. Excess sea water is discharged via line 9.

The deaerated sea water and a portion of concentrated brine, is racked via line 10 by the brine recirculating pump 11 into the heat recovery section 3, cooling the different MSF distillation stages 2. After having left the last unit 2 (on the left in Fig. 2), the brine is heated in the brine heater 1 and fed via line 12 back into the (most left) unit 2 of heat recovery section 3, and therefrom, in a reverse direction flow, into all other distillation units 2.

The brine heater 1 is heated by means of steam coming via a line 13 from a (non-illustrated) heat source. The condensate in the brine heater 1 is drawn off via line 14 by the pump 15.

After having left the last unit 2 (on the right in Fig. 2), the flashing brine flows via line 16 into the heat reject section 4, where further distillate is produced. Line 17 brings the brine back into the deaerator 5, from where the brine recirculating process continues. Excess brine is stripped out of the deaerator 5 via line 18 by the brine pump 19 and blown-off.

In the heat recovery section 3 and following in the heat rejection section 4, the brine is being condensed at the cold pipes and the collected distillate drawn off via line 20 by the distillate pump 21.

From Fig. 2 and the physical phenomena described before, it is easy to understand that if the steam produced in one or more stages of the rejection section 4 can be taken away and if the above mentioned steam is being pumped into the heat input section (brine heater 1), a lot of heating steam coming from the boiler or from other processes may be saved.

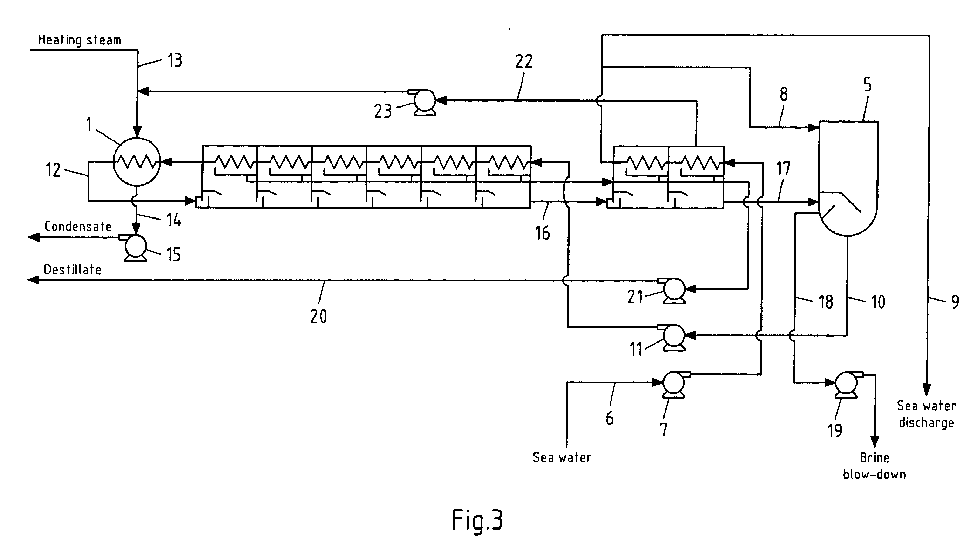

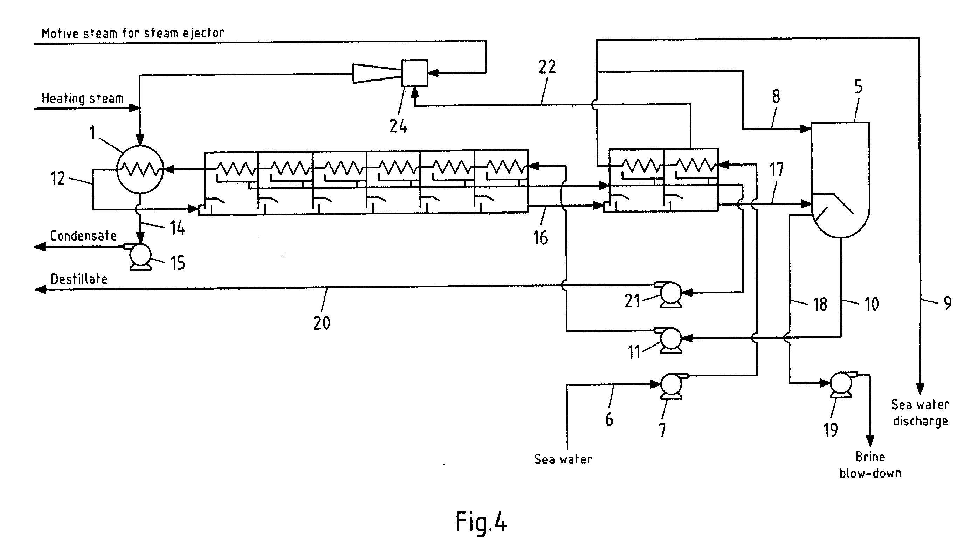

Consequently, the present invention covers all modifications of the MSF Desalination process which can be made with a steam recirculation system between the heat rejection section 4 to the heat input section (brine heater 1) as shown in Figs. 3 and 4. In Fig. 3, steam is taken from the first stage of the heat rejection section 4 via a line 22 and a pump 23 and fed into the heating steam leading to brine heater 1.

The steam recirculation system, object of this invention, can be obtained by way of a rotating or volumetric steam compression as shown in Fig. 3 or can be obtained with a steam jet ejector 24 as described in Fig. 4.

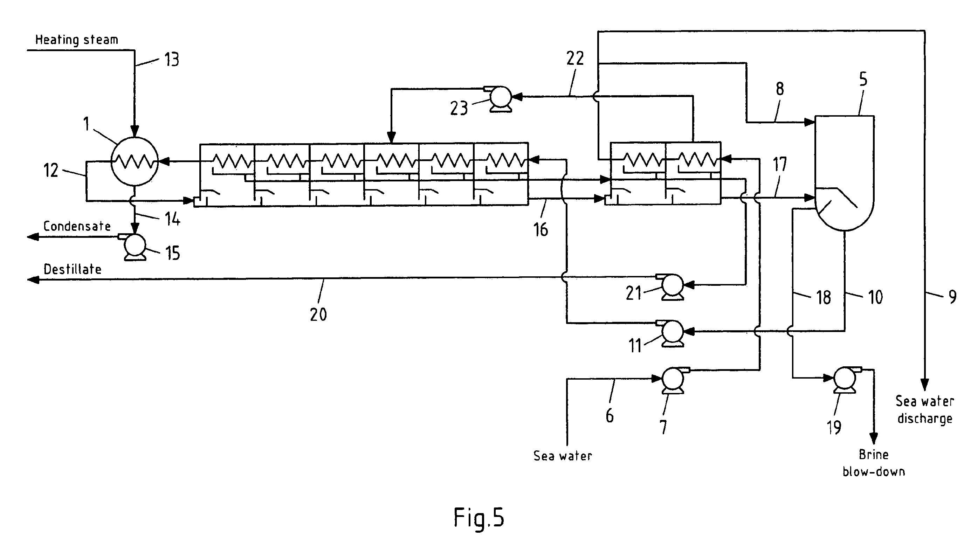

Figs. 5, 6, 7 and 8 show some preferred embodiments of possible combinations of the steam recirculation system according to the present invention.

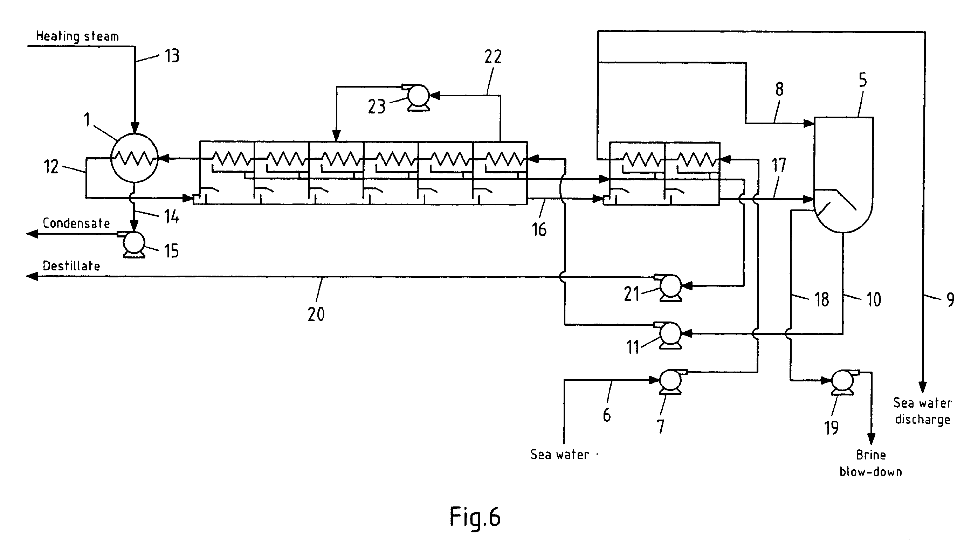

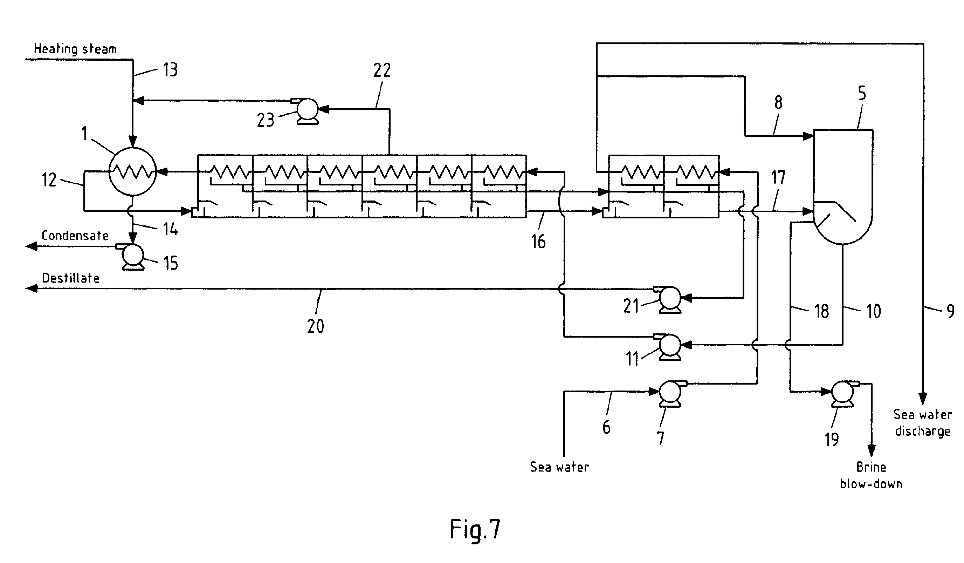

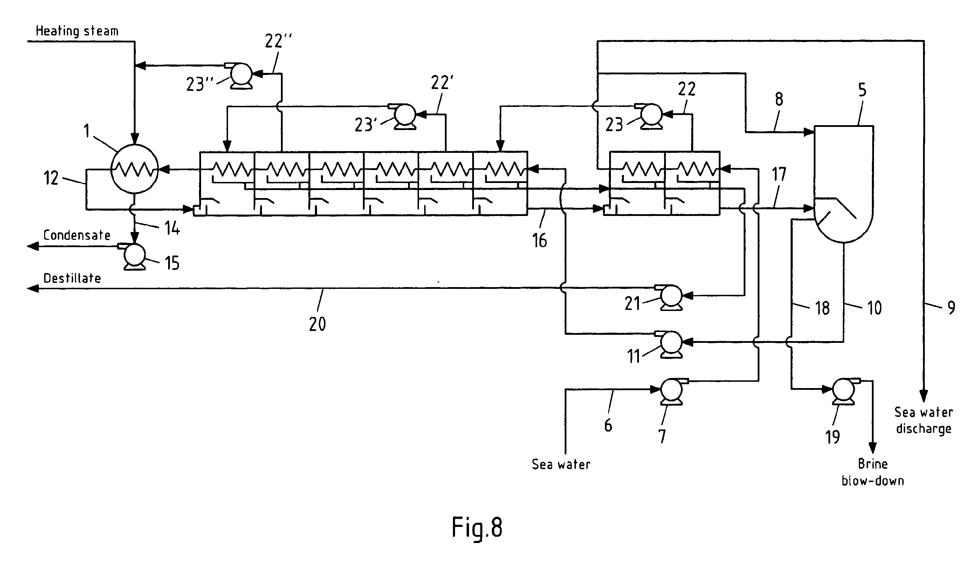

It is illustrated in Fig. 5 that the steam recirculation line 22 leads from the heat rejection section 4 to the heat recovery section 3. Fig 6 shows a recirculation line 22 and pump 23 within the heat recovery section 3. Fig. 7 shows a steam recirculation line 22 and a pump 23 between a distillation stage 2 and the heat input section. In Fig. 8 a combination of different recirculation lines 22, 22', 22" with respective pumps 23, 23', 23" is illustrated.

## Claims

1. A method for the desalination of salt water using a heat input section with a brine heater powered by heating steam, a heat recovery section of multi-stage flash (MSF) distillation units, a heat rejection section and a deaerator, wherein sea water is being deaerated and is pumped as a recirculating brine into the heat recovery and the heat rejection sections, where the evaporated brine is being condensed and the distillate is won, **characterized in that** the steam produced in at least one stage of the rejection section and/or the heat recovery section is taken away and is pumped into a section or stage up-stream with regard to the flashing brine flow.

2. The method according to claim 1, **characterized in that** the steam produced in at least one stage of the rejection section is pumped into the heating steam supplying the brine heater.

3. The method according to claim 1, **characterized in that** the steam produced in at least one stage of the distillation section is pumped into another distillation stage up-stream with regard to the flashing brine flow.

4. The method according to claim 1, **characterized in that** the steam produced in at least one stage of the distillation section is pumped into the heating steam supplying the brine heater.

5. A plant for the desalination of salt water with at least a brine heater (1), a desalination zone of multi-stage flash (MSF) distillation units (2) and, an optional deaerator (5), wherein a desalination zone comprises a heat recovery section (3) and a heat rejection (4) section for condensing the evaporated brine and winning the distillate, **characterized by** providing at least one steam recirculation line (22) from at least one stage of the rejection section (3) and/or the heat recovery section (4) for the steam produced to a section or stage up-stream with regard to the flashing brine flow.

6. The plant according to claim 5, **characterized by** an additional pump (23) for the additional steam recirculation line (22).

7. The plant according to claim 5 or 6, **characterized in that** the additional steam recirculation line (22) leads into a steam jet ejector (24).

## Patentansprüche

1. Verfahren zur Entsalzung von Salzwasser unter Verwendung eines Wärmezufuhrabschnitts mit einem Soleerhitzer, der durch Heizdampf angetrieben wird, eines Wärmerückgewinnungsabschnitts von Mehrstufen-Entspannungs (MSF)-Destillationseinheiten, eines Wärmeabführungsabschnitts und einer Entlüftungseinrichtung, wobei Meerwasser entlüftet und als eine Umlaufsole in die Wärmerückgewinnungs- und Wärmeabführungsabschnitte gepumpt wird, wobei die verdampfte Sole kondensiert und das Destillat gewonnen wird, **dadurch gekennzeichnet, dass** der Dampf, der in wenigstens einer Stufe des Abführungsabschnitts und/oder des Wärmerückgewinnungsabschnitts erzeugt wird, abgezogen und in einen Abschnitt oder eine Stufe gepumpt wird, die in Bezug auf den Entspannungssolefluss vorgelagert ist.

2. Verfahren nach Anspruch 1, **dadurch gekennzeichnet, dass** der Dampf, der in wenigstens einer Stufe des Abführungsabschnitts erzeugt wird, in den Heizdampf gepumpt wird, der den Soleerhitzer versorgt.

3. Verfahren nach Anspruch 1, **dadurch gekennzeichnet, dass** der Dampf, der in wenigstens einer Stufe des Destillationsabschnitts erzeugt wird, in eine andere Destillationsstufe gepumpt wird, die in Bezug auf den Entspannungssolefluss vorgelagert ist.

4. Verfahren nach Anspruch 1, **dadurch gekennzeichnet, dass** der Dampf, der in wenigstens einer Stufe des Destillationsabschnitts erzeugt wird, in den Heizdampf gepumpt wird, der den Soleerhitzer versorgt.

5. Anlage zur Entsalzung von Salzwasser mit wenigstens einem Soleerhitzer (1), einer Entsalzungszone von Mehrstufen-Entspannungs (MSF)-Destillationseinheiten (2) und einer optionalen Entlüftungseinrichtung (5), wobei eine Entsalzungszone einen Wärmerückgewinnungsabschnitt (3) und einen Wärmeabführungs Abschnitt (4) zum Kondensieren der verdampften Sole und Gewinnen des Destillats umfasst, **gekennzeichnet durch** Bereitstellen wenigstens einer Dampfumlaufleitung (22) von wenigstens einer Stufe des Abführungsabschnitts (4) und/oder des Wärmerückgewinnungsabschnitts (3) für den erzeugten Dampf zu einem Abschnitt oder einer Stufe, die in Bezug auf den Entspannungssolefluss vorgelagert ist.

6. Anlage nach Anspruch 5, **gekennzeichnet durch** eine zusätzliche Pumpe (23) für die zusätzliche Dampfumlaufleitung (22).

7. Anlage nach Anspruch 5 oder 6 **dadurch gekennzeichnet, dass** die zusätzliche Dampfumlaufleitung (22) in einen Damfstrahlejektor (24) führt.

## Revendications

1. Procédé de dessalement d'eau salée, utilisant une section d'apport de chaleur, avec un réchauffeur de saumure alimenté par de la vapeur de chauffage, une section de récupération de chaleur à unités de distillation éclair multi-étagées (MSF), une section de rejet de chaleur et un désaérateur, dans lequel de l'eau de mer est désaérée et pompée comme saumure en recirculation dans les sections de récupération et de rejet de chaleur, la saumure évaporée étant condensée et le distillat récupéré, **caractérisé en ce que** la vapeur produite dans au moins un étage de la section de rejet et/ou la section de récupération de chaleur est évacuée et pompée dans une section ou un étage en amont par rapport au flux de saumure subissant la distillation éclair.

2. Procédé selon la revendication 1, **caractérisé en ce que** la vapeur produite dans au moins un étage de la section de rejet est amenée par pompage dans la vapeur de chauffage alimentant le réchauffeur de saumure.

3. Procédé selon la revendication 1, **caractérisé en ce que** la vapeur produite dans au moins un étage de la section de distillation est amenée par pompage dans un autre étage de distillation en amont par rapport au flux de saumure subissant la distillation éclair.

4. Procédé selon la revendication 1, **caractérisé en ce que** la vapeur produite dans au moins un étage de la section de distillation est amenée par pompage dans la vapeur de chauffage alimentant le réchauffeur de saumure.

5. Installation de dessalement d'eau salée, avec au moins un réchauffeur de saumure (1), une zone de dessalement constituée d'unités (2) de distillation éclair multi-étagées (MSF), et un désaérateur (5) facultatif, dans laquelle une zone de dessalement comprend une section (3) de récupération de chaleur et une section (4) de rejet de chaleur pour condenser la saumure évaporée et récupérer le distillat, **caractérisée en ce qu'**elle comprend au moins une conduite (22) de recirculation de vapeur à partir d'au moins un étage de la section (3) de rejet et/ou la section (4) de récupération de chaleur, pour la vapeur produite, vers une section ou un étage en amont par rapport au flux de saumure subissant la distillation éclair.

6. Installation selon la revendication 5, **caractérisée par** une pompe (23) supplémentaire pour la conduite (22) supplémentaire de recirculation de vapeur.

7. Installation selon la revendication 5 ou 6, **caractérisée en ce que** la conduite (22) supplémentaire de recirculation de vapeur conduit à un éjecteur (24) à vapeur.
